# EUROPÄISCHE PATENTANMELDUNG

(11) **EP 2 688 011 A1**
(43) Veröffentlichungstag der Anmeldung: **22.01.2014**
(21) Anmeldenummer: 12177183.6
(22) Anmeldetag: 19.07.2012
(51) Int. Cl.: G06K 19/06

(54) **Mikropartikel, insbesondere Mikropartikel zur fälschungssicheren Kennzeichnung von Produkten**

(71) Anmelder: 3S Simons Security Systems GmbH, 48301 Nottuln (DE)
(72) Erfinder: Simons, Rolf, 48301 Nottuln (DE)
(74) Vertreter: Rupprecht, Kay

(57) **Zusammenfassung**

Die vorliegende Erfindung betrifft einen Mikropartikel (10), insbesondere einen Mikropartikel (10) zur fälschungssicheren Kennzeichnung von Produkten, wobei der Mikropartikel (10) wenigstens eine erste Schicht (20) und wenigstens eine zweite Schicht (30) aufweist, wobei die erste Schicht (20) eine außen liegende Seite (22) des Mikropartikels (10) bildet und wenigstens auf dieser außen liegenden Seite (22) zumindest ein auf dieser Seite (22) vorangebrachtes Zeichen (15) angeordnet ist, und wobei der Mikropartikel (10) mit jeder seiner Abmessungen ca. 100 µm nicht überschreitet. Des Weiteren betrifft die vorliegende Erfindung ein Verfahren zur Herstellung zumindest eines Mikropartikels (10), ein Etikett, einen Aufstrich sowie eine entsprechende Verwendung.

## Beschreibung

Die vorliegende Erfindung betrifft einen Mikropartikel, insbesondere einen Mikropartikel zur fälschungssicheren Kennzeichnung von Produkten, ein Verfahren zur Herstellung zumindest eines Mikropartikels, ein Etikett, einen Aufstrich sowie eine Verwendung insbesondere eines Mikropartikels zur fälschungssicheren Kennzeichnung von Produkten.

Die Unterscheidung von Originalwaren und von gefälschten Waren ist ein immer größer werdendes Problem. Dieses Problem wird insbesondere dadurch verstärkt, dass nachgemachte bzw. gefälschte Waren qualitativ immer besser werden und teilweise kaum mehr von den Originalwaren unterscheidbar sind. Darüber hinaus ist auch festzustellen, dass sich das Problem der Produkt- und Markenpiraterie nun nicht mehr nur im Wesentlichen auf z. B. nachgeahmte bzw. gefälschte Kleidung erstreckt, sondern zunehmend auch in sicherheitskritischen Bereichen wie beispielsweise bei Kraftfahrzeug- und Flugzeugersatzteilen oder auch im Pharmabereich, d.h. z.B. durch gefälschte Arzneimittel, auftritt.

Die Bereitstellung fälschungssicherer Erkennungsmerkmale für Originalwaren gewinnt daher zunehmend an Bedeutung.

Die DE 26 51 528 A1 offenbart diesbezüglich farbcodierte Kenn-Mikroteilchen, die aus mehreren farbigen Schichten in einer vorgewählten Farbfolge bestehen, wobei die Farbfolge einen Kenncode darstellt. Die Mikroteilchen werden dabei aus Melamin-Alkyd-Harz hergestellt, wobei sieben Farbschichten übereinander mit einer Dicke von 91,4 µm auf eine Polyesterträgerfolie von 50,8 µm aufgebracht werden.

Aus der US 4,390,452 sind ferner Mikropartikel einer einheitlichen Dicke von ca. 140 µm bekannt, wobei auf einer Oberfläche des Mikropartikels nach dem Zusammenfügen der mehreren Schichten Buchstaben und Zahlen aufgebracht werden.

Die WO 2007/106512 A2 offenbart ebenfalls Mikropartikel bestehend aus mehreren Schichten, die zudem mehrere Farben aufweisen.

Die US 6,952,994 B2 offenbart ein Identifikationsetikett, auf dem ein Hologramm aufgebracht ist.

Aus der EP 0 832 477 B1 ist ferner ein Verfahren zur Herstellung von mehrschichtigen Mikropartikeln bekannt, wobei auf einem bahn- oder bogenförmigen Träger nacheinander mehrere Kennzeichnungsschichten aufgetragen werden, wobei das Auftragen jeder Kennzeichnungsschicht in flüssiger Form erfolgt und wobei nach dem Auftragen jeder Kennzeichnungsschicht eine Trocknung und/oder Härtung erfolgt, bevor die nächste Kennzeichnungsschicht aufgetragen wird, bis ein Schichtenstapel mit einer gewünschten Art und Folge von Kennzeichnungsschichten gebildet ist, wobei in einem nächsten Schritt der Träger- und der Schichtenstapel voneinander getrennt werden und der Schichtenstapel unter Erhaltung der vollen Kennzeichnungsschichtenfolge zu mehrschichtigen Mikropartikeln zerkleinert wird.

Aus der EP 1 003 146 B1 ist ferner ein Verfahren zur Sicherung und Kennzeichnung von Produkten unter Verwendung von Mikropartikeln bekannt. Dabei werden für jedes Produkt zwei oder mehr verschieden codierte Mikropartikel-Gruppen verwendet.

Wünschenswert wäre es jedoch, die vorstehend beschriebenen Kennzeichnungssysteme noch sicherer zu machen, insbesondere im Hinblick auf die Nachahmungssicherheit noch weiter zu verbessern.

Es ist daher die Aufgabe der vorliegenden Erfindung, einen Mikropartikel, ein Verfahren zur Herstellung eines solchen Mikropartikels, ein Etikett, einen Aufstrich sowie eine entsprechende Verwendung der eingangs genannten Art in vorteilhafter Weise weiterzubilden, insbesondere dahingehend, dass die Nachahmungssicherheit erhöht wird und zugleich die Überprüfung der Mikropartikel erleichtert und intuitiver gestaltet wird.

Diese Aufgabe wird erfindungsgemäß gelöst durch einen Mikropartikel mit den Merkmalen des Patentanspruchs 1. Danach ist vorgesehen, dass ein Mikropartikel bereitgestellt wird, wobei der Mikropartikel wenigstens eine erste Schicht und wenigstens eine zweite Schicht aufweist, wobei die erste Schicht eine außen liegende Seite des Mikropartikels bildet und wenigstens auf dieser außen liegenden Seite zumindest ein auf dieser Seite vorangebrachtes Zeichen angeordnet ist, und wobei der Mikropartikel mit jeder seiner Abmessungen ca. 100 µ**m** nicht überschreitet.

Grundsätzlich ist auch denkbar, dass ein Zeichen nicht nur auf dieser einen außen liegenden Seite der ersten Schicht angebracht ist, sondern dass zusätzlich auch auf weiteren außen liegenden Seiten, zumindest auf einer weiteren außen liegenden Seite ein weiteres vorangebrachtes Zeichen angeordnet ist.

Dadurch ergibt sich insbesondere der Vorteil, dass die Nachahmungssicherheit erhöht wird, da die Nachahmbarkeit des Mikropartikels weiter erschwert wird, zum Einen durch das aufgebrachte, ersichtliche Zeichen, aber auch zum Anderen durch die gewählten Abmessungen des Mikropartikels.

Zugleich wird die Überprüfung der Mikropartikel erleichtert und intuitiver gestaltet, insbesondere dadurch, dass zusätzlich nun ein Zeichen auf der außen liegenden Seite des Mikropartikels angebracht ist, das z.B. unter Zuhilfenahme eines Vergrößerungsmittels wie einer Lupe oder eines Stabmikroskopes ersichtlich ist.

Der Mikropartikel kann insbesondere ein Mikropartikel zur fälschungssicheren Kennzeichnung von Produkten sein. Ein solcher Mikropartikel zur fälschungssicheren Kennzeichnung kann beispielsweise an einem Produkt angebracht werden, z.B. mit Hilfe eines Lackes. Alternativ kann ein solcher Mikropartikel auch in einem Produkt angebracht werden, beispielsweise in einer Bohrung oder durch Einbringung in den Werkstoff, aus dem das Produkt zumindest teilweise besteht. Der Mikropartikel kann im Wesentlichen aus Melamin-Alkyd-Polymeren bestehen.

Dadurch, dass das Zeichen auf der ersten Schicht vorangebracht ist, ergibt sich der Vorteil, dass beim Herstellungsverfahren des Mikropartikels überhaupt erst die Größe von weniger als ca. 100 µm erreicht werden kann.

Durch den Umstand, dass der Mikropartikel mit jeder seiner Abmessungen ca. 100 µm nicht überschreitet, ergibt sich insbesondere der Vorteil, dass die Nachahmung von Mikropartikeln erschwert bis unmöglich gemacht wird, da beispielsweise der Aufwand für Fälscher zu groß wird. Die Abmessungen des Mikropartikels sind insbesondere Länge, Breite und Tiefe des Mikropartikels, die jeweils ca. 100 µm nicht überschreiten.

Da die Mikropartikel vorzugsweise in einem Herstellungsprozess entstehen, in dem die Mikropartikel durch Zerkleinerung eines mehrlagigen Schichtaufbaus entstehen, weisen die Mikropartikel auch eine randomisierte Gestalt und ein oder mehrere Bruchkanten und/oder Schnittkanten auf.

Der Begriff des vorangebrachten Zeichens ist breit auszulegen. Insbesondere ist denkbar, dass im Zusammenhang mit dem Herstellungsschritt der Zerkleinerung zur Herstellung der Mikropartikel ein vorangebrachtes Zeichen nur noch teilweise erkennbar ist, was jedoch als vollkommen ausreichend im Sinne der Erfindung zu erachten ist. Grundsätzlich ist es wünschenswert und vorteilhaft, wenn wenigstens ein Zeichen vollständig ersichtlich ist, was jedoch nicht zwingend erforderlich zur Ausführung der Erfindung ist. Möglich ist auch, das mehrere Zeichen ganz oder teilweise vorgesehen sind, die auf dieser außen liegenden Seite angeordnet sind.

Es kann des Weiteren vorgesehen sein, dass der Mikropartikel wenigstens eine Fläche aufweist, die derart beschaffen ist, dass die übereinander liegenden Schichten ersichtlich sind. Eine derartige Fläche kann beispielsweise eine Bruchkante und/oder Schnittkante sein oder durch eine Bruchkante und/oder Schnittkante zumindest teilweise ausgebildet sein. Durch die übereinander liegenden Schichten kann beispielsweise eine Codierung ausgebildet sein, die durch die Fläche ersichtlich wird und somit optisch überprüfbar wird bzw. überprüft werden kann.

Ferner ist möglich, dass der Mikropartikel mit jeder seiner Abmessungen ca. 50 µm nicht überschreitet, vorzugsweise ca. 20 µm nicht überschreitet, besonders bevorzugt ca. 8 µm nicht überschreitet. In einem Fall, in dem der Mikropartikel mit jeder seiner Abmessungen ca. 8 µm nicht überschreitet, kann die erste Schicht insbesondere durch ein sogenanntes Transfermaterial ausgebildet werden. Ein derartiges Transfermaterial kann beispielsweise ein Heißtransfer bzw. ein Bügelbild oder dergleichen sein.

Grundsätzlich ist denkbar, dass jegliche Größe der Abmessungen im Bereich zwischen ca. 8 µm bis ca. 100 µm gewählt werden kann. Insbesondere ist es dabei vorteilhaft, dass das zumindest eine Zeichen vollständig auf der außenliegenden Fläche der ersten Schicht ersichtlich bleibt und die Abmessungen des Mikropartikels dementsprechend gewählt werden. Es ist somit denkbar, dass der Mikropartikel mit jeder seiner Abmessungen ca. 100 µm nicht überschreitet, aber auch mit jeder seiner Abmessungen ca. 8 µm nicht unterschreitet.

Darüber hinaus ist denkbar, dass das zumindest eine Zeichen zumindest ein Teil eines Hologramms und/oder eines Aufdruckes ist, wobei vorzugsweise das Zeichen wenigstens einen Buchstaben, wenigstens ein Teil eines Bildzeichens und/oder wenigstens eines Wort-/Bildzeichens, insbesondere eines Logos und/oder Markenzeichens ist oder ein derartiges Zeichen umfasst. Insbesondere ist vorteilhaft möglich, dass es sich zur Kennzeichnung von Originalwaren bei dem Zeichen stets um das Markenzeichen des Originalherstellers handelt.

Außerdem kann vorgesehen sein, dass die erste Schicht durch eine Polyesterfolie, insbesondere ein PET-Folie ausgebildet ist, wobei vorzugsweise die Polyesterfolie bzw. insbesondere die PET-Folie eine Schichtstärke im Bereich zwischen ca. 5 µm bis 15 µm, vorzugsweise von ca. 7 µm aufweist.

Es ist weiter möglich, dass die zweite Schicht eine Farbschicht ist.

Vorteilhafterweise kann ferner vorgesehen sein, dass wenigstens eine weitere Schicht vorgesehen ist, die auf der zweiten Schicht aufgetragen und/oder angeordnet ist. Diese weitere Schicht kann eine Farbschicht sein.

Vorzugsweise ist möglich, dass mehrere weitere Schichten vorgesehen sind, die auf der zweiten Schicht aufgetragen und/oder angeordnet sind, wobei vorzugsweise die weiteren Schichten Farbschichten sind, so dass vorzugsweise die zweite Schicht und die weiteren Schichten eine Anordnung von Schichten ergeben, die derart beschaffen ist, dass durch die Schichten ein Farbcode ausgebildet wird, wobei die Schichten vorzugsweise jeweils eine Schichtstärke im Bereich zwischen ca. 0,5 µm bis ca. 15 µm, beispielsweise zwischen ca. 8 µm bis 10 µm, vorzugsweise zur Herstellung kleiner Mikropartikel ca. 0,8 µm, aufweisen.

Dieser Farbcode kann derart beschaffen sein, dass er eindeutig einem Hersteller und/oder einem Produkt zugeordnet werden kann. Denkbar ist, der Farbcode durch einen Schichtaufbau von fünf bis zwölf Schichten aufgebaut ist. Vorzugsweise werden Schichtanzahlen von zehn oder elf Schichten gewählt, um eine ausreichende Codierungsmöglichkeit zu erhalten.

In einem Fall, in dem der Farbcode durch einen Schichtaufbau von bis zu zwölf Schichten aufgebaut ist, kann die erste der zwölf Schichten eine Schicht mit wenigstens einem vorangebrachten Zeichen sein, die weiteren Schichten zwei bis elf Farbschichten und die zwölfte Schicht erneut eine Schicht mit wenigstens einem vorangebrachten Zeichen sein.

Des Weiteren betrifft die vorliegende Erfindung ein Verfahren zur Herstellung zumindest eines Mikropartikels nach Anspruch 8. Danach ist vorgesehen, dass bei einem Verfahren zur Herstellung zumindest eines Mikropartikels, insbesondere eines Mikropartikels zur fälschungssicheren Kennzeichnung von Produkten, zunächst auf wenigstens eine erste Schicht wenigstens eine zweite Schicht aufgebracht wird, wobei die erste Schicht eine außen liegende Seite des Mikropartikels bildet und wenigstens auf dieser außen liegenden Seite zumindest ein auf dieser Seite vorangebrachtes Zeichen angeordnet ist, und wobei die wenigstens eine erste Schicht und wenigstens eine zweite Schicht in Mikropartikel zerteilt wird, wobei ein Mikropartikel mit jeder seiner Abmessungen ca. 100 µm nicht überschreitet.

Insbesondere kann vorgesehen sein, dass die erste Schicht durch eine Polyesterfolie, insbesondere PET-Folie ausgebildet ist, wobei vorzugsweise die Polyesterfolie, bzw. insbesondere die PET-Folie eine Schichtstärke im Bereich zwischen ca. 5 µm bis 15 µm, vorzugsweise von ca. 7 µm aufweist.

Ferner ist möglich, dass die zweite Schicht eine Farbschicht ist und/oder wenigstens eine weitere Schicht, vorzugsweise mehrere weitere Schichten vorgesehen werden, die vorzugsweise auf der zweiten Schicht aufgetragen und/oder angeordnet werden, wobei vorzugsweise die weiteren Schichten Farbschichten sind, so dass vorzugsweise die zweite Schicht und die weiteren Schichten eine Anordnung von Schichten ergeben, die derart beschaffen ist, dass durch die Schichten ein Farbcode ausgebildet wird, wobei die Schichten vorzugsweise jeweils eine Schichtstärke im Bereich zwischen ca. 0,5 µm bis ca. 50 µm, beispielsweise zwischen ca. 8 µm bis 10 µm, vorzugsweise zur Herstellung kleiner Mikropartikel ca. 0,8 µm, aufweisen.

Außerdem ist bevorzugt, wenn es sich bei dem Verfahren um ein Verfahren zur Herstellung eines Mikropartikels nach einem der Ansprüche 1 bis 7 handelt.

Zur Herstellung der Mikropartikel wird beispielsweise derart vorgegangen, dass auf der als Trägerschicht fungierenden ersten Schicht nacheinander die wenigstens eine zweite Schicht bzw. mehrere Schichten aufgetragen werden. Diese weiteren Schichten können Farbschichten, insbesondere Kennzeichnungsschichten sein. Beispielsweise kann das Auftragen dieser Kennzeichnungsschichten in flüssiger Form erfolgen.

Nach dem Auftragen jeder Kennzeichnungsschicht kann ferner eine Trocknung und/oder Härtung erfolgen, bevor die nächste Kennzeichnungsschicht aufgetragen wird. Dies wird solange fortgeführt bis ein Schichtenstapel mit der gewünschten Art und Folge von Kennzeichnungsschichten ausgebildet ist.

Sodann wird der Schichtenstapel unter Erhaltung der vollen Kennzeichnungsschichtenfolge zu mehrschichtigen Mikropartikeln zerkleinert.

Das Auftragen der einzelnen Kennzeichnungsschichten erfolgt dabei mittels eines Druckverfahrens, wobei vorzugsweise ein Hochdruckverfahren oder ein Tiefdruckverfahren oder ein Flachdruckverfahren oder ein Durchdruckverfahren bzw. Siebdruckverfahren verwendet werden kann.

Grundsätzlich ist auch denkbar, dass das Auftragen jeder Kennzeichnungsschicht statt in flüssiger Form auch in pastöser Form erfolgen kann. Insbesondere ist in diesem Zusammenhang denkbar, dass das Auftragen jeder Kennzeichnungsschicht in einem thixotropen Zustand erfolgt.

Möglich ist insbesondere auch, dass als Grundsubstanz für die Kennzeichnungsschichten Glaspulver und/oder Emaillepulver mit zugesetzten hitzebeständigen Farbpigmenten verwendet wird und dass diese Grundsubstanz vor dem Auftragen durch Zugabe von Transferlack oder Drucköl in pastöse Form gebracht wird.

Es ist möglich, dass das Auftragen jeder Kennzeichnungsschicht statt in flüssiger Form oder pastöser Form auch in trockenem Zustand in Pulverform mittels eines Bronzierverfahrens erfolgen kann. Insbesondere ist in diesem Zusammenhang denkbar, dass als Grundsubstanz für die Kennzeichnungsschichten Glaspulver und/oder Emaillepulver mit zugesetzten hitzebeständigen Farbpigmenten verwendet wird.

Des Weiteren ist denkbar, dass das Auftragen der einzelnen Kennzeichnungsschichten mittels eines Spritzlackierverfahrens erfolgen kann. Auch ist denkbar, dass für das Auftragen der einzelnen Kennzeichnungsschichten ein Walzlackierverfahren herangezogen werden kann.

Besonders vorteilhaft ist es, wenn der auf der ersten Schicht, also der Trägerschicht aufgebaute Schichtenstapel bestehend aus den Kennzeichnungsschichten vor seiner Zerkleinerung getrocknet und/oder gehärtet und/oder getempert wird. Dabei können Trocknung und Härtung bevorzugt durch Wärme und/oder UV-Strahlung bewirkt werden. Dieser Schritt der Trocknung und/oder Härtung und/oder Temperung ist zweckmäßig, um vor dem nachfolgenden Zerkleinern des Schichtenstapels in die einzelnen Mikropartikel den einzelnen Schichten in sich und dem Schichtenstapel für diese Zerkleinerung günstige mechanische Eigenschaften zu verleihen. Insbesondere wird dadurch eine relativ hohe Sprödigkeit bei gleichzeitig guter Stabilität und festem Zusammenhalt der Schichten erreicht.

Das Zerkleinern des Schichtenstapels kann auf an sich bekannte Art und Weise, z.B. in geeigneten Mühlen, wie z.B. Kugelmühlen erfolgen. Diese Zerkleinerung erfolgt zweckmäßig nur soweit, dass innerhalb der überwiegenden Zahl der dabei entstehenden Mikropartikel jeweils noch die volle Kennzeichnungsschichtenfolge enthalten ist, um die Identifizierung mit den Mikropartikeln gekennzeichneten Stoffen oder Gegenständen zweifelsfrei zu ermöglichen. Nach dem Zerkleinerungsvorgang kann zusätzlich auch noch eine Sortierung der Mikropartikel erfolgen, wobei dann diejenigen Mikropartikel, die nicht mehr über die volle Kennzeichnungsschichtenfolge und/oder kein vollständiges Zeichen verfügen, aussortiert werden, um sie von der weiteren Verwendung für Kennzeichnungszwecke auszuschließen.

Vorteilhafterweise wird dabei die Größe der Mikropartikel in einem Bereich zwischen ca. 8 µm bis ca. 100 µm gewählt, da in diesem Bereich jedenfalls sichergestellt ist, dass wenigstens ein Zeichen auf der außen liegenden Seite der Trägerschicht erkennbar ist.

Des Weiteren betrifft die vorliegende Erfindung einen Mikropartikel mit den Merkmalen des Anspruchs 12. Danach ist vorgesehen, dass ein Mikropartikel erhalten wird durch ein Verfahren nach einem der Ansprüche 8 bis 10.

Ferner betrifft die vorliegende Erfindung ein Etikett mit den Merkmalen des Anspruchs 13. Danach ist vorgesehen, dass ein Etikett zumindest einen Mikropartikel nach einem der Ansprüche 1 bis 7 oder 12 aufweist. Der Begriff Etikett ist breit zu verstehen. In diesem Zusammenhang kann ein Etikett auch ein Transfer (insbesondere ein Bügelbild oder Heißtransfer) oder ein Abziehbild sein.

Außerdem betrifft die vorliegende Erfindung einen Aufstrich mit den Merkmalen des Anspruchs 14. Danach ist vorgesehen, dass ein Aufstrich zumindest einen Mikropartikel nach einem der Ansprüche 1 bis 7 oder 12 enthält. Der Aufstrich kann insbesondere ein Lack oder eine Farbe sein, in dem beispielsweise eine oder mehrere Mikropartikel enthalten sind. Vorzugsweise sind in dem Aufstrich mehrere Mikropartikel dispergiert. Der Aufstrich ist dabei vorzugsweise transparent, z.B. ein Klarlack oder dergleichen, wie z.B. ein transparentes Harz oder ein transparenter Kleber.

Des Weiteren betrifft die vorliegende Erfindung die Verwendung eines Mikropartikels mit den Merkmalen des Anspruchs 15. Danach ist vorgesehen, dass ein Mikropartikel nach einem der Ansprüche 1 bis 7 oder 12 und/oder ein Etiketts nach Anspruch 13 und/oder ein Aufstrichs nach Anspruch 14 zur fälschungssicheren Kennzeichnung von Produkten verwendet wird.

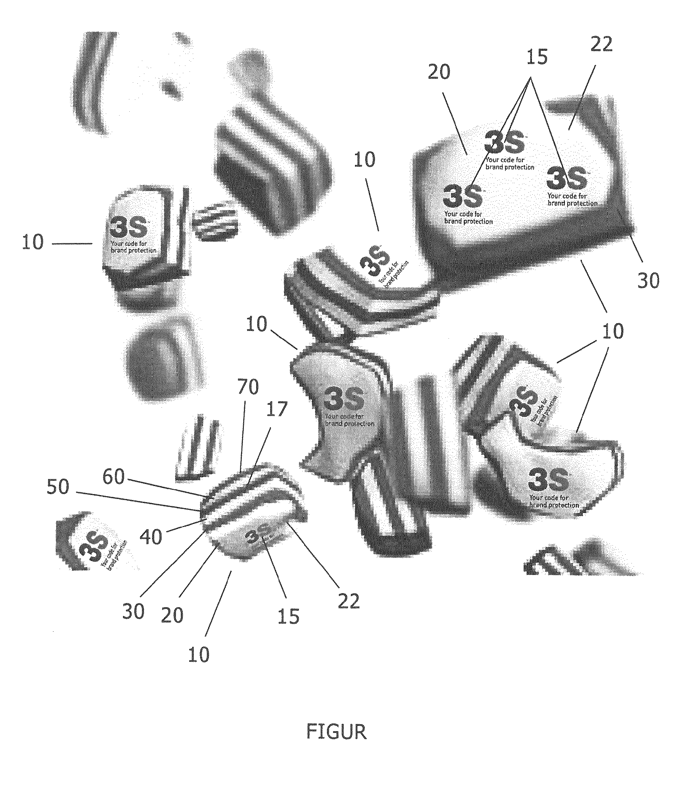

Weitere Einzelheiten und Vorteile der Erfindung sollen nun anhand eines in der Zeichnung dargestellten Ausführungsbeispiels näher erläutert werden.

Die einzige Figur zeigt eine Vielzahl von Mikropartikeln gemäß der vorliegenden Erfindung.

Wie sich dies aus der Figur ergibt, sind die Mikropartikel 10 aufgrund des Zerkleinerungsvorgangs nicht identisch, sondern hinsichtlich ihrer Formgebung randomisiert, d.h. die Formgebung der Partikel ist zufällig und nicht vordefiniert.

Die Mikropartikel 10 dienen zur fälschungssicheren Kennzeichnung von Produkten und weisen dabei wenigstens eine erste Schicht 20 auf, auf der im Herstellungsverfahren die weiteren Schichten 30, 40, 50, 60, 70 aufgetragen werden. Die erste Schicht 20 ist somit eine Trägerschicht 20.

Die Schichten 30, 40, 50, 60, 70 sind dabei Farbschichten, die auf die Trägerschicht 20 aufgetragen werden.

Die erste Schicht 20 bzw. Trägerschicht 20 bildet eine außen liegende Seite 22 des Mikropartikels 10. Auf dieser außen liegenden Seite 22 ist dabei zumindest ein Zeichen 15, hier ein Logo 15 bzw. die Marke eines Unternehmens 15 angeordnet. Dieses Zeichen 15 ist dabei bereits im Vorfeld auf der Schicht 20 aufgebracht bzw. aufgetragen.

Insbesondere kann es sich bei der Schicht 20 um eine Trägerfolie, insbesondere um eine Polyesterfolie bzw. eine PET-Folie handeln. Die Zeichen 15 können dabei aufgedruckt oder in sonstiger Form auf der Trägerfolie 20 aufgebracht sein. Grundsätzlich ist auch denkbar, dass die Zeichen 15 als Schrift im Nanobereich auf der Trägerschicht 20 aufgebracht sind. Denkbar ist beispielweise, dass die Schrifthöhe oder die Zeichenhöhe 1 nm oder mehr beträgt.

Es ferner denkbar, dass die Trägerfolie 20 auf der Seite 22 mehrere Zeichen 15 in Form von Hologrammen oder Aufdrucken aufweist.

Die Mikropartikel 10 sind dabei derart beschaffen, dass die Mikropartikel 10 mit jeder ihrer Abmessungen ca. 100 µm nicht überschreiten, vorzugsweise 50 µm, besonders bevorzugt 8 µm. Im in der Figur gezeigten Ausführungsbeispiel sind die Abmessungen der Mikropartikel 10 im Bereich zwischen ca. 8 µm bis ca. 100 µm gewählt, wobei jedoch diese Untergrenze und Obergrenze nicht unter- bzw. überschritten wird.

Die Schichten 30, 40, 50, 60, 70 sind Farbschichten, hier beispielsweise eine rote Farbschicht 30, eine weiße Farbschicht 40, eine blaue Farbschicht 50, eine weitere weiße Farbschicht 60 und eine schwarze Farbschicht 70.

Der Mikropartikel 10 weist ferner wenigstens eine Fläche 17 auf, die derart beschaffen ist, dass die übereinander liegenden Farbschichten 30, 40, 50, 60, 70 ersichtlich sind. Die Fläche 17 ist eine Seitenfläche 17, die durch den Zerkleinerungsprozess während der Herstellung des Mikropartikels 10 entsteht, also beispielsweise im Wesentlichen eine Schnittkante oder eine Bruchkante ist.

Die Anordnung dieser Farben bzw. Farbschichten 30, 40, 50, 60, 70 bildet einen Farbcode aus, der in Kombination mit dem Zeichen 15, hier beispielsweise dem Markenzeichen eines Unternehmens insgesamt einen fälschungssicheren Code ausbildet. Dieser Code kann einfach beispielsweise mittels eines Stabmikroskopes bzw. Auflichtmikroskopes überprüft werden.

Die Mikropartikel 10 können dabei in ein Etikett eingebracht oder auf einem Etikett aufgetragen werden, beispielsweise mittels eines Aufstriches wie beispielsweise eines Klarlackes oder dergleichen wie ein transparentes Harz oder ein transparenter Kleber.

Grundsätzlich ist auch denkbar, dass die Mikropartikel 10 in einem Aufstrich, wie beispielsweise einer Farbe oder einem Lack dispergiert werden und somit direkt auf dem zu kennzeichnenden Produkt aufgebracht werden können.

Zur Herstellung der Mikropartikel 10 wird derart vorgegangen, dass auf der als Trägerschicht fungierenden ersten Schicht 20 nacheinander die Schichten 30, 40, 50, 60, 70 aufgetragen werden, wobei vorzugsweise das Auftragen der Kennzeichnungsschichten 30, 40, 50, 60, 70 in flüssiger Form erfolgt und wobei nach dem Auftragen jeder Kennzeichnungsschicht 30, 40, 50, 60, 70 eine Trocknung und/oder Härtung erfolgt, bevor die nächste Kennzeichnungsschicht 30, 40, 50, 60, 70 aufgetragen wird. Dies wird solange fortgeführt bis ein Schichtenstapel mit der gewünschten Art und Folge von Kennzeichnungsschichten ausgebildet ist. Sodann wird der Schichtenstapel unter Erhaltung der vollen Kennzeichnungsschichtenfolge zu mehrschichtigen Mikropartikeln 10 zerkleinert.

Das Auftragen der einzelnen Kennzeichnungsschichten erfolgt dabei mittels eines Druckverfahrens, wobei vorzugsweise ein Hochdruckverfahren oder ein Tiefdruckverfahren oder ein Flachdruckverfahren oder ein Durchdruckverfahren bzw. Siebdruckverfahren verwendet werden kann.

Grundsätzlich ist auch denkbar, dass das Auftragen jeder Kennzeichnungsschicht 30, 40, 50, 60, 70 statt in flüssiger Form auch in pastöser Form erfolgen kann. Insbesondere ist in diesem Zusammenhang denkbar, dass das Auftragen jeder Kennzeichnungsschicht 30, 40, 50, 60, 70 in einem thixotropen Zustand erfolgen. Möglich ist insbesondere auch, dass als Grundsubstanz für die Kennzeichnungsschichten 30, 40, 50, 60, 70 Glaspulver und/oder Emaillepulver mit zugesetzten hitzebeständigen Farbpigmenten verwendet wird und dass diese Grundsubstanz vor dem Auftragen durch Zugabe von Transferlack oder Drucköl in pastöse Form gebracht wird.

Es ist möglich, dass das Auftragen jeder Kennzeichnungsschicht 30, 40, 50, 60, 70 statt in flüssiger Form oder pastöser Form auch in trockenem Zustand in Pulverform mittels eines Bronzierverfahrens erfolgen kann. Insbesondere ist in diesem Zusammenhang denkbar, dass als Grundsubstanz für die Kennzeichnungsschichten 30, 40, 50, 60, 70 Glaspulver und/oder Emaillepulver mit zugesetzten hitzebeständigen Farbpigmenten verwendet wird.

Des Weiteren ist denkbar, dass das Auftragen der einzelnen Kennzeichnungsschichten mittels eines Spritzlackierverfahrens erfolgen kann. Auch ist denkbar, dass für das Auftragen der einzelnen Kennzeichnungsschichten 30, 40, 50, 60, 70 ein Walzlackierverfahren herangezogen werden kann.

Besonders vorteilhaft ist es, wenn der auf der Trägerschicht 20 aufgebaute Schichtenstapel bestehend aus den Kennzeichnungsschichten 30, 40, 50, 60, 70 vor seiner Zerkleinerung getrocknet und/oder gehärtet und/oder getempert wird. Dabei können Trocknung und Härtung bevorzugt durch Wärme bewirkt werden. Dieser Schritt der Trocknung und/oder Härtung und/oder Temperung ist zweckmäßig, um vor dem nachfolgenden Zerkleinern des Schichtenstapels in die einzelnen Mikropartikel 10 den einzelnen Schichten in sich und dem Schichtenstapel für diese Zerkleinerung günstige mechanische Eigenschaften zu verleihen. Insbesondere wird dadurch eine relativ hohe Sprödigkeit bei gleichzeitig guter Stabilität und festem Zusammenhalt der Schichten 20, 30, 40, 50, 60, 70 erreicht.

Das Zerkleinern des Schichtenstapels kann auf an sich bekannte Art und Weise, z.B. in geeigneten Mühlen, wie z.B. Kugelmühlen erfolgen. Diese Zerkleinerung erfolgt zweckmäßig nur soweit, dass innerhalb der überwiegenden Zahl der dabei entstehenden Mikropartikel 10 jeweils noch die volle Kennzeichnungsschichtenfolge enthalten ist, um die Identifizierung mit den Mikropartikeln 10 gekennzeichneten Stoffen oder Gegenständen zweifelsfrei zu ermöglichen. Nach dem Zerkleinerungsvorgang kann zusätzlich auch noch eine Sortierung der Mikropartikel 10 erfolgen, wobei dann diejenigen Mikropartikel, die nicht mehr über die volle Kennzeichnungsschichtenfolge und/oder vollständiges ein Zeichen 15 verfügen, aussortiert werden, um sie von der weiteren Verwendung für Kennzeichnungszwecke auszuschließen.

Vorteilhafterweise wird dabei die Größe der Mikropartikel 10 in einem Bereich zwischen ca. 8 µm bis ca. 100 µm gewählt, da in diesem Bereich jedenfalls sichergestellt ist, dass wenigstens ein Zeichen 15 auf der außen liegenden Seite 22 der Trägerschicht 20 erkennbar ist.

## Patentansprüche

1. Mikropartikel (10), insbesondere Mikropartikel (10) zur fälschungssicheren Kennzeichnung von Produkten, wobei der Mikropartikel (10) wenigstens eine erste Schicht (20) und wenigstens eine zweite Schicht (30) aufweist, wobei die erste Schicht (20) eine außen liegende Seite (22) des Mikropartikels (10) bildet und wenigstens auf dieser außen liegenden Seite (22) zumindest ein auf dieser Seite (22) vorangebrachtes Zeichen (15) angeordnet ist, und wobei der Mikropartikel (10) mit jeder seiner Abmessungen ca. 100 µm nicht überschreitet.

2. Mikropartikel (10) nach Anspruch 1,
**dadurch gekennzeichnet, dass**
der Mikropartikel (10) wenigstens eine Fläche (17) aufweist, die derart beschaffen ist, dass die übereinander liegenden Schichten (20, 30) ersichtlich sind.

3. Mikropartikel (10) nach Anspruch 1 oder 2,
**dadurch gekennzeichnet, dass**
der Mikropartikel (10) mit jeder seiner Abmessungen ca. 50 µm nicht überschreitet, vorzugsweise ca. 20 µm nicht überschreitet, besonders bevorzugt ca. 8 µm nicht überschreitet.

4. Mikropartikel (10) nach einem der vorhergehenden Ansprüche,
**dadurch gekennzeichnet, dass**
das zumindest eine Zeichen (15) zumindest ein Teil eines Hologramms und/oder eines Aufdruckes ist, wobei vorzugsweise das Zeichen (15) wenigstens einen Buchstaben, wenigstens ein Teil eines Bildzeichens und/oder wenigstens eines Wort-/Bildzeichens, insbesondere eines Logos und/oder Markenzeichens ist oder ein derartiges Zeichen umfasst.

5. Mikropartikel (10) nach einem der vorhergehenden Ansprüche,
**dadurch gekennzeichnet, dass**
die erste Schicht (20) durch eine Polyesterfolie, insbesondere ein PET-Folie ausgebildet ist, wobei vorzugsweise die Polyesterfolie bzw. insbesondere die PET-Folie eine Schichtstärke im Bereich zwischen ca. 5 µm bis 15 µm, vorzugsweise von ca. 7 µm aufweist.

6. Mikropartikel (10) nach einem der vorhergehenden Ansprüche,
**dadurch gekennzeichnet, dass**
die zweite Schicht (30) eine Farbschicht (30) ist.

7. Mikropartikel (10) nach einem der vorhergehenden Ansprüche,
**dadurch gekennzeichnet, dass**
wenigstens eine weitere Schicht (40), vorzugsweise mehrere weitere Schichten (40, 50, 60, 70) vorgesehen sind, vorzugsweise auf der zweiten Schicht (30) auftragen und/oder angeordnet sind, wobei vorzugsweise die weiteren Schichten (40, 50, 60, 70) Farbschichten sind, so dass vorzugsweise die zweite Schicht (30) und die weiteren Schichten (40, 50, 60, 70) eine Anordnung von Schichten ergeben, die derart beschaffen ist, dass durch die Schichten (30, 40, 50, 60, 70) ein Farbcode ausgebildet wird, wobei die Schichten (30, 40, 50, 60, 70) vorzugsweise jeweils eine Schichtstärke im Bereich zwischen ca. 0,5 µm bis ca. 50 µm, vorzugsweise ca. 0,8 µm, aufweisen.

8. Verfahren zur Herstellung zumindest eines Mikropartikels (10), insbesondere eines Mikropartikels (10) zur fälschungssicheren Kennzeichnung von Produkten, wobei zunächst auf wenigstens eine erste Schicht (20) wenigstens eine zweite Schicht (30) aufgebracht wird, wobei die erste Schicht (20) eine außen liegende Seite (22) des Mikropartikels (10) bildet und wenigstens auf dieser außen liegenden Seite (22) zumindest ein auf dieser Seite (22) vorangebrachtes Zeichen (15) angeordnet ist, und wobei die wenigstens eine erste Schicht (20) und wenigstens eine zweite Schicht (30) in Mikropartikel (10) zerteilt wird, wobei ein Mikropartikel (10) mit jeder seiner Abmessungen ca. 100 µm nicht überschreitet.

9. Verfahren nach Anspruch 8,
**dadurch gekennzeichnet, dass**
die erste Schicht (20) durch eine Polyesterfolie, insbesondere PET-Folie ausgebildet ist, wobei vorzugsweise die Polyesterfolie, bzw. insbesondere die PET-Folie eine Schichtstärke im Bereich zwischen ca. 5 µm bis 15 µm, vorzugsweise von ca. 7 µm aufweist.

10. Verfahren nach Anspruch 8 oder 9,
**dadurch gekennzeichnet, dass**
die zweite Schicht (30) eine Farbschicht (30) ist und/oder wenigstens eine weitere Schicht (40), vorzugsweise mehrere weitere Schichten (40, 50, 60, 70) vorgesehen werden, vorzugsweise auf der zweiten Schicht (30) auftragen und/oder angeordnet werden, wobei vorzugsweise die weiteren Schichten (40, 50, 60, 70) Farbschichten sind, so dass vorzugsweise die zweite Schicht (30) und die weiteren Schichten (40, 50, 60, 70) eine Anordnung von Schichten ergeben, die derart beschaffen ist, dass durch die Schichten (30, 40, 50, 60, 70) ein Farbcode ausgebildet wird, wobei die Schichten (30, 40, 50, 60, 70) vorzugsweise jeweils eine Schichtstärke im Bereich zwischen ca. 0,5 µm bis ca. 50 µm, vorzugsweise ca. 0,8 µm, aufweisen.

11. Verfahren nach einem der Ansprüche 8 bis 10,
**dadurch gekennzeichnet, dass**
das Verfahren ein Verfahren zur Herstellung eines Mikropartikels (10) nach einem der Ansprüche 1 bis 7 ist.

12. Mikropartikel (10) erhalten durch ein Verfahren nach einem der Ansprüche 8 bis 10.

13. Etikett aufweisend zumindest einen Mikropartikel (10) nach einem der Ansprüche 1 bis 7 oder 12.

14. Aufstrich, insbesondere Farbe oder Lack, enthaltend zumindest einen Mikropartikel (10) nach einem der Ansprüche 1 bis 7 oder 12.

15. Verwendung eines Mikropartikels (10) nach einem der Ansprüche 1 bis 7 oder 12 und/oder eines Etiketts nach Anspruch 13 und/oder eines Aufstrichs nach Anspruch 14 zur fälschungssicheren Kennzeichnung von Produkten.
